# FASCICULE DE BREVET EUROPEEN

(11) **EP 0 465 296 B1**
(45) Date de publication et mention de la délivrance du brevet: **19.01.1994**
(21) Numéro de dépôt: 91401698.5
(22) Date de dépôt: 24.06.1991
(51) Int. Cl.: B62D 1/04

(54) **Armature de volant de direction pour véhicule automobile ou analogue**
Lenkradarmatur für Kraftfahrzeug oder dergleichen
Steering wheel armature for automotive vehicle or the same

(30) Priorité: 03.07.1990 FR 9008404
(43) Date de publication de la demande: 08.01.1992
(73) Titulaire: ECIA - EQUIPEMENTS ET COMPOSANTS POUR L'INDUSTRIE AUTOMOBILE, F-25400 Audincourt (FR)
(72) Inventeur: Ocard, Paul, F-25230 Seloncourt (FR); Beguier, André Résidence Le Clos de l'Etrier, F-25200 Montbeliard (FR)
(74) Mandataire: Habasque, Etienne Joel Jean-François

(56) Documents cités:
- EP-A- 0 029 616
- FR-A- 2 346 093
- FR-A- 2 470 040
- GB-A- 1 571 902

## Description

La présente invention concerne les volants de direction qui comportent une jante annulaire reliée par l'intermédiaire de plusieurs bras radiaux à un moyeu de fixation sur un axe de direction.

Il est bien connu que les volants de direction de véhicule automobile doivent à la fois être légers et faciles à manoeuvrer et présenter une faible inertie polaire et une résistance importante de façon à ne se rompre ni sous l'action des vibrations dues au déplacement du véhicule ni sous l'effet d'un choc ou analogue. Dans ce but, ils sont généralement constitués par une armature métallique, de préférence en fil ou en tube, qui est revêtue d'une mousse de polyuréthane, ou analogue, assurant l'aspect esthétique et le confort du conducteur.

Pour accroître leur légèreté il a été proposé, ainsi que décrit dans le brevet américain 4 448 091, de former la jante à l'aide d'un tube incurvé en forme d'anneau et replié à ses extrémités pour constituer un bras radial et être fixé sur le moyeu. Malheureusement un tel volant ne comporte qu'un seul bras radial, ce qui ne correspond pas au confort désiré par les conducteurs de véhicules, et en outre il a souvent une résistance insuffisante.

Il a également été proposé, ainsi que le décrit le brevet anglais 1 571 902, de réaliser la jante au moyen d'un tube creux et de la relier par des bras pleins à un moyeu surmoulé sur les extrémités de ces bras. Le volant peut ainsi avoir le nombre de bras radiaux désiré, mais son poids et son encombrement sont accrus.

On connait également du document FR-A-2 470 040, une armature de volant de direction pour véhicule automobile comportant une jante périphérique tubulaire reliée à un moyeu de fixation sur un axe de direction par plusieurs bras radiaux. La jante comporte deux tubes incurvés en portions d'anneau sensiblement complémentaires et repliés à leurs extrémités vers l'intérieur et vers le bas pour former des rayons de volant ayant des parties terminales dirigées parallèlement à l'axe de direction.

Cependant, cette armature présente un certain nombre d'inconvénients notamment au niveau de sa résistance.

La présente invention a pour but de fournir une armature de volant de direction qui permette à la fois de répondre aux exigences de légèreté, de faible inertie polaire et de résistance et de donner au volant le nombre de bras radiaux jugé préférable pour le confort du conducteur.

Cette invention a en effet pour objet une armature de volant de direction comportant une jante périphérique tubulaire reliée à un moyeu de fixation sur un axe de direction, par plusieurs bras radiaux, dans lequel la jante comporte au moins deux tubes incurvés, en portions d'anneau sensiblement complémentaires, et repliés à leurs extrémités vers l'intérieur et vers le bas, pour former des rayons de volant ayant des parties terminales dirigées axialement, caractérisée en ce que le moyeu est moulé en métal léger et en ce que les parties terminales sont progressivement écrasées et présentent une section droite incurvée en forme de haricot et sont moulées dans des bossages latéraux sensiblement longitudinaux du moyeu.

Selon une autre caractéristique de l'invention, les deux rayons adjacents de deux tubes incurvés successifs sont moulés côte à côte dans chacun des bossages du moyeu pour former un bras radial.

De préférence un tube de renforcement est monté à l'intérieur de la partie terminale de chacun des rayons de volant et progressivement écrasé avec cette dernière.

Un tel volant bénéficie des qualités de légèreté des tubes qui constituent la jante et les bras radiaux mais a également une résistance importante du fait à la fois de la présence de plusieurs bras radiaux et de la coopération des bossages du moyeu avec les parties terminales progressivement écrasées sur lesquelles ces bossages sont moulés.

La description ci-dessous d'un mode de réalisation, donné à titre d'exemple non limitatif et représenté aux dessins annexés, fera d'ailleurs ressortir les avantages et caractéristiques de l'invention. Sur ces dessins :

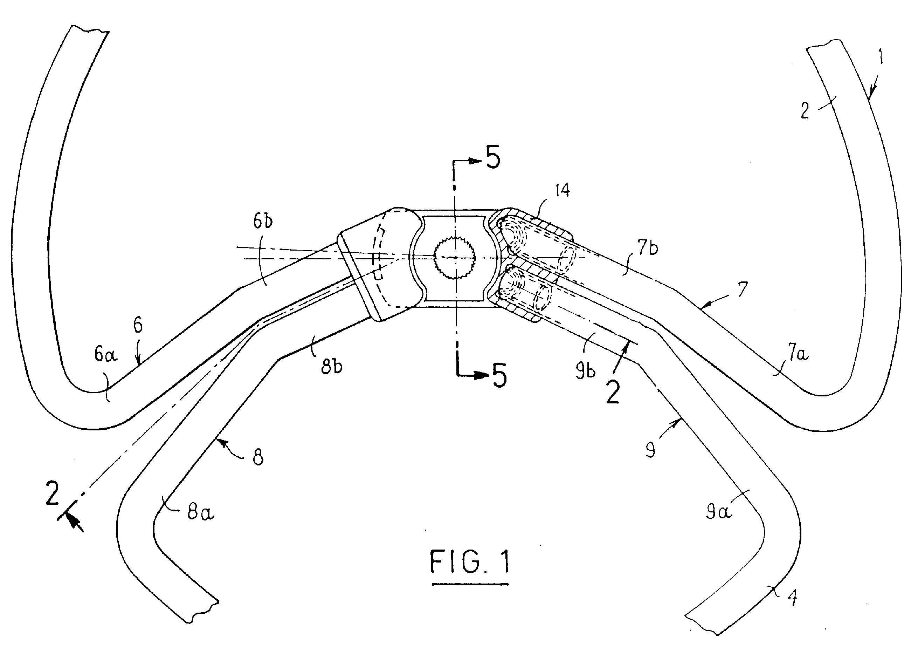

La figure 1 est une vue de dessus, avec arrachement partiel, d'une armature de volant de direction selon l'invention.

La figure 2 est une vue en coupe suivant la ligne 2/2 de la Fig.1.

La figure 3 est une vue de dessous du moyeu du volant de direction, prise suivant la flèche F de la Fig.2.

La figure 4 est une vue en coupe suivant la ligne 4/4 de la Fig.2.

La figure 5 est une vue en coupe suivant la ligne 5/5 de la Fig.3.

Comme le montrent les dessins, l'armature de volant de direction objet de l'invention comporte une jante tubulaire périphérique 1 qui est constituée par plusieurs tubes incurvés, en forme de portions d'anneau sensiblement complémentaires, disposés les uns à côté des autres. Dans le mode de réalisation représenté la jante 1 est formée par deux tubes, respectivement 2 et 4, qui sont incurvés avec le même rayon et dont l'un, le tube 2, s'étend sur plus d'une demi circonférence tandis que l'autre, le tube 4, occupe le secteur complémentaire. Chacun de ces tubes 2 et 4 est replié à ses extrémités pour former des rayons respectivement 6-7 et 8-9 dirigés vers l'intérieur et vers le bas.

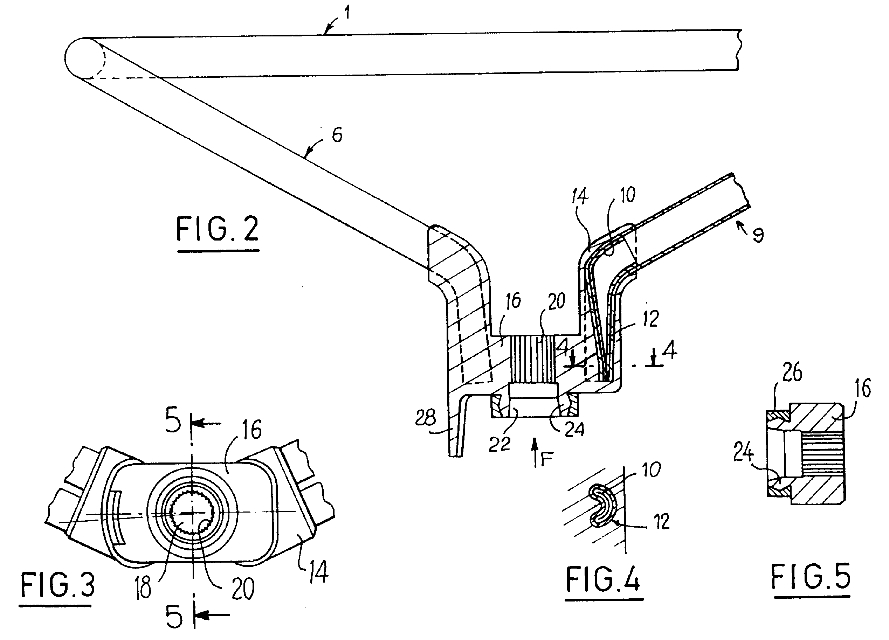

Les rayons adjacents 6-8 ou 7-9 des deux tubes comportent ainsi à partir de la portion de jante 2, 4 des parties obliques et convergentes 6a et 8a d'une part, et 7a et 9a d'autre part, qui sont prolongées par des parties rectilignes et parallèles, 6b, 8b et 7b, 9b, d'abord obliques puis coudées et pratiquement verticales. A l'intérieur de la partie terminale de chacun des rayons est placé un tube de renforcement 10 dont le diamètre extérieur est tel qu'il est appliqué étroitement contre la face interne de chacun des tubes 6, 7, 8 et 9. Ce tube de renforcement ainsi qu'à l'intérieur du coude qui relie cette partie verticale à la portion oblique (Fig. 2).

L'ensemble du tube de renforcement 10 et de la partie terminale verticale 12 du rayon correspondant a une section progressivement écrasée de sorte que le rayon est fermé de manière étanche à son extrémité inférieure. La partie terminale écrasée 12 conserve toutefois une section incurvée en forme de haricot, ainsi que le montre plus particulièrement la Fig.4, son épaisseur se réduisant progressivement jusqu'au contact des parois entre elles.

Sur les parties terminales 12 des deux rayons adjacents 6-8 ou 7-9 est moulé un bossage 14 d'une seule pièce avec un moyeu 16 permettant la fixation du volant sur un axe de direction (non représenté). Les bossages 14, au nombre de deux dans le mode de réalisation représenté, font saillie latéralement, en direction longitudinale vers le haut, par rapport au moyeu 16. Ils enveloppent chacun la partie terminale verticale 12 des deux rayons adjacents 7-9 ou 6-8 ainsi que le coude de ces tubes. Les deux tubes sont ainsi noyés totalement dans la matière, de préférence un métal léger tel que l'aluminium ou un alliage d'aluminium, qui constitue le moyeu en étant isolés l'un de l'autre mais maintenus très proches. Ils peuvent ainsi constituer l'armature d'un même bras radial du volant qui est ainsi solidement fixé sur le moyeu.

Le moyeu 16 comporte bien entendu de la manière habituelle un orifice axial 18 dont la partie supérieure est munie de cannelures internes 20 de coopération avec des cannelures correspondantes de l'axe de volant, ainsi qu'une portion conique 22 de serrage. De préférence comme représenté sur la Fig.2, la portion conique 22 est formée dans un prolongement annulaire 24 du moyeu 16 et une bague 26 en métal plus dur, par exemple en acier, et montée sur le prolongement 24 lors du serrage de l'ensemble sur une colonne de direction afin de le renforcer. De préférence comme représenté, le prolongement 24 a extérieurement une forme en double cône et la surface interne de la bague 26 est rétrécie dans sa partie médiane pour épouser cette forme.

De la partie inférieure du moyeu 16 part également un doigt 28 qui est venu de matière avec le moyeu et constitue un doigt de rappel de clignotant. Ce doigt de rappel est dirigé verticalement vers le bas, c'est-à-dire en direction opposée à celle des bossages.

L'ensemble du moyeu a ainsi une forme particulièrement compacte et une dimension relativement faible dans le sens transversal tout en permettant une liaison résistante et sûre des bras radiaux sur lui. Cette forme étroite facilite le montage du volant notamment dans le cas où le moyeu doit être introduit dans une gaine du tableau de bord, présentant un orifice de petit diamètre.

Il apparaîtra clairement que le moyeu 16 peut comporter tout nombre désiré de bossages 14, c'est-à-dire que le nombre de bras radiaux du volant peut être supérieur à deux et varier en fonction du type de confort désiré par le conducteur.

## Revendications

1. Armature de volant de direction pour véhicule automobile ou analogue, comportant une jante périphérique tubulaire (1) reliée à un moyeu (16) de fixation sur un axe de direction par plusieurs bras radiaux, la jante (1) comportant au moins deux tubes (2,4) incurvés, en portions d'anneau sensiblement complémentaires, et repliés à leurs extrémités vers l'intérieur et vers le bas pour former des rayons de volant (6,7 et 8,9) ayant des parties terminales (12) dirigées axialement, caractérisée en ce que le moyeu est moulé en métal léger et en ce que les parties terminales sont progressivement écrasées et présentent une section droite incurvée en forme de haricot et sont moulées dans des bossages latéraux (14) sensiblement longitudinaux du moyeu (16).

2. Armature de volant suivant la revendication 1, caractérisée en ce que les deux rayons (6,8 - 7,9) adjacents de deux tubes successifs (2, 4) sont moulés côte à côte dans un même bossage (14) pour former un bras radial.

3. Armature de volant suivant l'une des reveddications 1 et 2, caractérisée en ce que les deux rayons adjacents (6-7, 8-9) ont à partir de la jante des portions convergentes (7a, 9a) puis des parties parallèles (7b, 9b, 6b, 8b) d'abord obliques puis verticales.

4. Armature de volant suivant l'une des revendications précédentes, caractérisée en ce qu'un tube de renforcement (10) est placé à l'intérieur de la partie terminale progressivement écrasée de chacun des rayons de volant (6-8, 7-9).

5. Armature de volant suivant l'une des revendications précédentes, caractérisée en ce que la partie terminale (12) de chacun des rayons est fermée par écrasement à son extrémité inférieure.

6. Armature de volant suivant l'une des revendications 3 ou 4, caractérisée en ce que chaque bossage (14) est moulé sur toute la partie terminale progressivement écrasée (12) des deux rayons ainsi que sur les coudes qui relient ces parties terminales aux parties obliques (6b, 8b - 7b, 9b) des rayons du volant.

7. Armature de volant suivant l'une des revendications précédentes, caractérisée en ce que le moyeu (16) est muni à sa partie inférieure d'un prolongement annulaire (24) ayant une surface interne tronconique et entouré par une bague de serrage (26).

8. Armature de volant suivant la revendication 7, caractérisée en ce que le moyeu (16) est moulé en un métal léger, tel que l'aluminium ou un alliage d'aluminium, et la bague (26) est réalisée en un métal plus résistant tel que l'acier.

## Patentansprüche

1. Lenkradarmatur für Automobile oder dergleichen, mit einer rohrförmigen Umfangsfelge (1), die durch mehrere radiale Speichen mit einer Nabe (16) zur Befestigung an einer Lenkachse verbunden ist, wobei die Felge (1) wenigstens zwei zu im wesentlichen komplementären Ringab- schnitten gebogene Rohre (2, 4) aufweist, die an ihren Enden nach innen und unten gebogen sind, um Lenkradspeichen (6, 7 und 8, 9) mit axial gerichteten Endabschnitten zu bilden, dadurch gekennzeichnet, daß die Nabe aus Leichtmetall geformt ist und daß die Endabschnitte zunehmend abgeflacht sind und einen geraden, bohnenförmig gebogenen Abschnitt aufweisen und in im wesentlichen längsverlaufenden seitlichen Ansätzen (14) der Nabe (16) eingeformt sind.

2. Lenkradarmatur nach Anspruch 1, dadurch gekennzeich- net, daß die beiden benachbarten Speichen (6,8 - 7,9) der aufeinanderfolgenden Rohre (2, 4) zur Bildung einer radialen Speiche nebeneinanderliegend in denselben An satz (14) eingeformt sind.

3. Lenkradarmatur nach einem der Ansprüche 1 und 2, dadurch gekennzeichnet, daß die beiden benachbarten Speichen (6-7, 8-9), von der Lenkradfelge ausgehend, konvergierende Abschnitte (7a, 9a) und anschließend parallele Abschnitte (7b, 9b, 6b, 8b) aufweisen, die zunächst schräg und sodann vertikal verlaufen.

4. Lenkradarmatur nach einem der vorhergehenden Ansprüche, dadurch gekennzeichnet, daß im Inneren des zunehmend abgeflachten Endabschnitts jeder Lenkradspeiche (6-8, 7-9) ein Verstärkungsrohr (10) vorgesehen ist.

5. Lenkradarmatur nach einem der vorhergehenden Ansprüche, dadurch gekennzeichnet, daß der Endabschnitt (12) jeder Speiche an seinem unteren Ende durch Abflachen geschlossen ist.

6. Lenkradarmatur nach einem der Ansprüche 3 und 4, dadurch gekennzeichnet, daß jeder Ansatz (14) über den gesamten zunehmend abgeflachten Endabschnitt (12) der beiden Speichen sowie über die Biegungen, welche diese Endabschnitte mit den schrägverlaufenden Abschnitten (6b, 8b - 7b, 9b) der Lenkradspeichen verbinden, ausgeformt ist.

7. Lenkradarmatur nach einem der vorhergehenden Ansprüche, dadurch gekennzeichnet, daß die Nabe (16) an ihrem unteren Bereich mit einer Verlängerung (24) versehen ist, die eine kegelgtumpfförmige Innenfläche aufweist und von einer Klemmhülse (26) umgeben ist.

8. Lenkradarmatur nach Anspruch 7, dadurch gekennzeichnet, daß die Nabe (16) aus Leichtmetall, wie Aluminium oder eine Aluminiumlegierung, geformt ist und die Hülse (26) aus einem festeren Metall, beispielsweise Stahl, gebildet ist.

## Claims

1. Steering wheel frame for an automobile vehicle or the like, comprising a tubular peripheral rim (1) connected to a hub (16) for fixing to a steering shaft, by a plurality of radial arms, the rim (1) comprising at least two curved tubes (2, 4) in the form of substantially complementary portions of a ring and inwardly and downwardly bent at their ends so as to form steering wheel spokes (6,7 and 8,9) having axially extending and portions (12), characterized in that the hub is moulded in light metal and in that the end portions are progressively crushed and have a curved cross-section in the shape of a haricot bean and are moulded in substantially longitudinal lateral bosses (14) of the hub (16).

2. Steering wheel frame according to Claim 1, characterized in that the two adjacent spokes (6,8 - 7,9) of two successive tubes (2, 4) are moulded side by side in a common boss (14) so as to form a radial arm.

3. Steering wheel frame according to either of Claims 1 and 2, characterized in that the two adjacent spokes (6-7, 8-9) comprise, starting at the rim, convergent portions (7a, 9a), then parallel portions (7b, 9b, 6b, 8b) which are first of all oblique and then vertical.

4. Steering wheel frame according to one of the preceding claims, characterized in that a reinforcing tube (10) is placed inside the progressively crushed end portion of each of the steering wheel spokes (6-8, 7-9).

5. Steering wheel frame according to one of the preceding claims, characterized in that the end portion (12) of each of the spokes is closed by a crushing of its lower end.

6. Steering wheel frame according to either of Claims 3 or 4, characterized in that each boss (14) is moulded on the whole of the progressively crushed end portion (12) of the two spokes and on the bent portions which connect these end portions to the oblique portions (6b, 8b-7b, 9b) of the steering wheel spokes.

7. Steering wheel frame according to one of the preceding claims, characterized in that the hub (16) is provided in its lower part with an annular extension (24) which has a frustoconical inner surface and is surrounded by a gripping ring (26).

8. Steering wheel frame according to Claim 7, characterized in that the hub (16) is moulded in a light metal, such as aluminium or an aluminium alloy, and the ring (26) is made from a stronger metal such as steel.
